**Europäisches Patentamt**

**European Patent Office**

**Office européen des brevets**

(11) Veröffentlichungsnummer: **0 325 785 B1**

(12) **EUROPÄISCHE PATENTSCHRIFT**

(45) Veröffentlichungstag der Patentschrift: **02.09.92**

(21) Anmeldenummer: **88121653.5**

(22) Anmeldetag: **24.12.88**

(51) Int. Cl.⁵: **B23K 9/10**

(54) Verfahren und Vorrichtung zum Inertschutzgas-Lichtbogenschweissen.

(30) Priorität: **29.12.87 US 138854**

(43) Veröffentlichungstag der Anmeldung:
**02.08.89 Patentblatt 89/31**

(45) Bekanntmachung des Hinweises auf die
Patenterteilung:
**02.09.92 Patentblatt 92/36**

(84) Benannte Vertragsstaaten:
**AT BE CH DE ES FR GB GR IT LI LU NL SE**

(56) Entgegenhaltungen:
**EP-A- 0 012 576**
**FR-A- 2 529 031**
**US-A- 3 728 515**

(73) Patentinhaber: **THE LINCOLN ELECTRIC COM-
PANY**
**22801 St. Clair Avenue**
**Cleveland, Ohio 44117(US)**

(72) Erfinder: **Stava, Elliot Keith**
**6963 Windward Hills**
**Brecksville, Ohio 44121(US)**

(74) Vertreter: **Hennicke, Albrecht, Dipl.-Ing. et al
Patentanwälte Dipl.-Ing. Buschhoff Dipl.-Ing.
Hennicke Dipl.-Ing. Vollbach Kaiser-
Wilhelm-Ring 24 Postfach 190 408
W-5000 Köln 1(DE)**

## Beschreibung

Die Erfindung bezieht sich auf das Lichtbogenschweißen und mehr im einzelnen auf ein Verfahren und eine Vorrichtung, die insbesondere zum Inertschutzgas-Lichtbogenschweißen von Aluminium geeignet ist.

Die Erfindung ist mit besonderem Vorteil beim Inert-Lichtbogenschweißen von Aluminium anwendbar und es wird unter besonderer Bezugnahme hierauf beschrieben, wobei im folgenden die Art des Schweißverfahrens als "TIG-Schweißen" (Tungsten Inert Gas - Schweißen) bezeichnet wird. Man wird jedoch aus der folgenden Beschreibung erkennen, daß die Erfindung ein breiteres Anwendungsgebiet hat und bei verschiedenen Lichtbogenschweißverfahren verwendet werden kann, die sowohl eine abschmelzende als auch eine nicht abschmelzende Elektrode verwenden und wo es wünschenswert ist, die Polarität eines von einer Gleichstromquelle kommenden Stromes im Lichtbogen zwischen der Elektrode und dem Werkstück periodisch umzukehren.

Beim Schweißen von Aluminium und ähnlichen Metallen ist es üblich geworden, die TIG-Schweißung anzuwenden, bei der eine nicht abschmelzende Elektrode, wie beispielsweise eine Tungsten-Elektrode, in einem genügend großen Abstand vom Werkstück gehalten wird, um einen Lichtbogen zu erzeugen, wenn ein unter Spannung stehender Strom über den Spalt fließt. Da Aluminium sehr leicht oxidiert, ist es notwendig, das Aluminiumoxid von der Schweißoberfläche zu entfernen, während der Fülldraht durch die Hitze des Lichtbogens abgeschmolzen wird und sich auf dem Aluminiumwerkstück ablagert. Hierbei war es allgemein üblich, das Metall dadurch zu reinigen, daß eine Wechselstromquelle verwendet wurde, die einen Wechselstrom durch den Lichtbogenspalt zwischen Elektrode und Werkstück sandte. Bei diesem Verfahren ist die Elektrode während der positiven Periode im Hinblick auf das Werkstück positiv gepolt; die Elektronen werden deshalb vom Werkstück emittiert. Bei diesem Verfahren wird das Aluminiumoxid zerkleinert und vor der unmittelbar folgenden negativen Periode von der Oberfläche der Schweiße entfernt, wobei die Tungsten-Elektrode oder eine andere nicht abschmelzende Elektrode in bezug auf das Werkstück negativ gepolt ist. Die Elektronen werden hierbei von der Tungsten-Elektrode in Richtung auf das Werkstück emittiert, um im Bereich des Lichtbogens eine relativ wirksame Erwärmung zu bewirken. Bei Verwendung von Wechselstrom für den Lichtbogen werden miteinander abwechselnde, vorausgehende Reinigungsperioden und Heizperioden erzeugt, die ein recht wirksames TIG-Schweißen von Aluminium ermöglichen.

Obgleich dieses Schweißverfahren erfolgreich und weit verbreitet ist, stellten sich jedoch wesentliche praktische und verfahrensmäßige Nachteile heraus. So ist es beispielsweise kein optimal wirksames Verfahren, mit positiven Reinigungsperioden zu arbeiten, deren Dauer im wesentlichen die gleiche ist wie die Dauer der negativ gepolten Heizperioden. Der Unterschied im Emissionsvermögen von Elektrode und Werkstück verzerrt die Wechselstromperiode derart, daß eine verhältnismäßig kleine positive Periode zwischen negativ gepolten Heiz-Halbperioden entsteht. Dieser unsymmetrische Ausgangsstrom ist typisch für Wechselstromquellen vom magnetischen Verstärkertyp, die zum Wechselstrom-TIG-Schweißen von Aluminium verwendet werden. Zusätzlich zu den obengenannten Nachteilen kann das TIG-Schweißen von Aluminium mit einer vorhandenen Ausrüstung zum Hand-Lichtbogenschweißen von Metall mit Schutzgas und Flußmittelkernelektrode nicht leicht verwendet werden. Die meisten, auf der Baustelle vorhandenen industriellen Stromversorgungseinrichtungen zum Lichtbogenschweißen sind Gleichstromerzeuger. Diese Schweißeinrichtungen auf Wechselstrom umzustellen, so daß ein TIG-Schweißen mit ihnen durchgeführt werden kann, ist für die meisten Eigentümer von Gleichstromversorgungseinrichtungen ein kostenintensives und unpraktisches Verfahren.

Wenn Gleichstromquellen zum TIG-Schweißen verwendet werden, muß der Schweißer die zu verwendende Polung auswählen. Wenn Flußeisen oder nichtrostender Stahl geschweißt werden soll, muß dieser nicht gereinigt werden. Es kann dann eine Gleichstrom-TIG-Schweißung mit negativer Elektrodenpolung durchgeführt werden. Diese Polung ergibt keine Reinigungswirkung zum Beseitigen eines Oxidfilms. Wenn dieses Verfahren deshalb zum Schweißen von Aluminium verwendet wird, muß vor dem Schweißen die Schweißoberfläche gereinigt und von Oxiden befreit werden. Dies ist praktisch nur durchführbar, wenn eine dicke Aluminiumplatte nach dem TIG-Verfahren geschweißt wird und die erforderliche vorherige Reinigung durch die größere Schweißgeschwindigkeit bei Verwendung einer negativen Elektrodenpolung aufgehoben wird. Im Hinblick hierauf wählt der Schweißer oft eine Gleichstrom-TIG-Schweißung mit positiver Polung der Elektrode, bei der der Strom von der Elektrode zum Werkstück fließt. Dies erzeugt zwar beim Lichtbogenschweißen eine Reinigungswirkung, führt jedoch auch zu einem sehr langsamen Schweißfortschritt. Obgleich dieses Konzept auch technisch akzeptabel ist, wird die Tungsten-Elektrode extrem heiß, es sei denn, ihre Abmessung wird drastisch vergrößert und es wird eine Wasserkühlung eingesetzt. Aus diesem Grund erfordert die Verwendung von Gleichstrom mit positiver Elektrodenpolung zum Erzielen eines Reinigungseffektes den Einsatz eines speziellen TIG-Schweißbrenners. Dieser ist teuer, sehr schwer zu steuern und steht im allgemeinen auf der Baustelle nicht zur Verfügung.

In der Zusammenfassung bedeutet dies, daß beim TIG-Schweißen, insbesondere beim TIG-Schweißen von Aluminium, eine spezielle Wechselstromquelle zur Verfügung stehen muß oder daß ein Schweißer Gleichstromquellen mit einer gewählten Polung einsetzen muß, die unwirtschaftlich und unbequem ist und nicht den optimalen Verfahrensablauf gewährleistet.

Diese und andere Nachteile der gegenwärtigen Technologie beim TIG-Schweißen werden durch die vorliegende Erfindung beseitigt, die die Verwendung einer Gleichstromquelle zum Erzeugen der Vorteile eines Wechselstromschweißgerätes erlaubt.

Die Erfindung bezieht sich auf eine Vorrichtung oder einen Schaltkreis, der an eine handelsübliche Gleichstromquelle für ein TIG-Schweißgerät angeschlossen werden kann, welches die Vorteile von Wechselstrom-TIG-Schweißgeräten hat.

Mit der vorliegenden Erfindung wird ein Verfahren und eine Vorrichtung zum TIG-Schweißen vorgeschlagen, bei dem eine Gleichstromversorgungseinrichtung verwendet wird. Das Verfahren und die Vorrichtung setzen eine Drossel oder eine Drosselspule mit hohem Blindwiderstand ein, welche Spule einen ersten Teil und einen zweiten Teil aufweist. Hierbei wird die Gleichstromquelle durch den ersten Teil der Drossel über die Elektrode und das Werkstück hindurchgeleitet. Dies erzeugt eine negativ gepolte Stromflußrichtung zum Erzielen einer vorher ausgewählten Heizperiode, während welcher Energie in der Drossel gespeichert wird. Dann wird der zweite Teil der Drosselspule über die Elektrode und das Werkstück in positiver Richtung geschaltet für ein vorher ausgewählte Reinigungsperiode. Der Richtungswechsel des Stromes wird wiederholt, um einen Schweißstrom zu erzeugen, der zwischen einer positiven Reinigungsperiode und einer negativen Heizperiode abwechselt. Dieser Stromwechsel wird durch Hochgeschwindigkeitsstromschalter erreicht, von denen der eine Schalter durchlässig oder leitend ist, während der andere Schalter nicht leitend ist und umgekehrt. Bei solch einem Schaltschema wird die Gleichstromquelle in der negativen Polrichtung für eine wirksame Aufheizung über die Elektrode und das Werkstück geschaltet. Die aufgespeicherte Energie wird anschließend über das Werkstück und die Elektrode in die entgegengesetzte Polrichtung geschaltet, um den weiter oben erwähnten Reinigungseffekt zu erzielen. Hierbei kann die Heizperiode zum Einstellen des Ausmaßes der Reinigung in bezug auf die Reinigungsperiode dadurch verändert werden, daß lediglich die Zeitdauer geändert wird, während der der eine Schalter eingeschaltet und der andere Schalter ausgeschaltet ist und umgekehrt. Infolgedessen wird eine Reinigung nur soweit durchgeführt, wie sie zum Erzeugen einer Qualitätsschweißung erforderlich ist.

In der Vergangenheit hatten Wechselstrom-TIG-Schweißgeräte oft eine wenig genaue Einrichtung zum Steuern der zum Reinigen benötigten Energie als die, die mit der Erfindung vorgeschlagen wird. Hier wird jede dieser beiden Perioden in effizienter Weise eingesetzt, ohne daß eine wesentliche Ausrüstung, Technologie oder Abwandlung einer vorhandenen Gleichstromquelle erforderlich ist, die für viele kleine Schweißgeräte zur Verfügung steht.

Durch Verwendung eines relativ billigen Schaltkreises oder einer Schaltvorrichtung der Erfindung kann jedes normale Gleichstromschweißgerät in ein TIG-Schweißgerät umgewandelt werden, das zum effektiven Schweißen von Aluminium ausreichend tauglich ist. Diese verhältnismäßig einfache Zusatzeinrichtung zum Umwandeln eines Gleichstrom-TIG-Schweißgerätes in ein Wechselstrom-TIG-Schweißgerät mit geringen Kosten beseitigt die Nachteile, die bei Wechselstromschweißgeräten, Wellenformumwandlern und bei der Verwendung von Gleichstromquellen zum TIG-Schweißen vorhanden sind. Die Erfindung hat den Vorteil, daß eine Vorrichtung geschaffen wird, die an eine Gleichstromquelle angepaßt werden kann, um diese Stromquelle in eine Wechselstromquelle zum TIG-Schweißen auf der Baustelle umzuwandeln.

Ein weiterer Vorteil der Erfindung besteht darin, daß mit der Vorrichtung Metall mit verschiedenen Reinigungsanforderungen geschweißt werden kann, wobei lediglich die Arbeitsperiode verstellt werden muß, um während der Reinigungsperioden zwischen negativ gepolten Heizperioden die richtige Reinigungsenergie zur Verfügung zu stellen.

Ferner besteht bei der TIG-Schweißeinrichtung die Möglichkeit, den Arbeitszyklus zwischen Reinigungspolung und Heizpolung durch einfaches Verändern der Arbeitsperiode eines Standard-Generators einzustellen.

Bei dem Verfahren nach der Erfindung wird eine Drossel oder Drosselspule mit hohem Blindwiderstand benutzt, die einen ersten und zweiten Teil aufweist, wobei der erste Teil der Drosselspule für eine Heizperiode in einer negativen Polrichtung der Stromquelle parallelgeschaltet wird, und daß dann das Verfahren umgedreht wird, indem man den zweiten Teil der Drosselspule mit dem Werkstück in der entgegengesetzten Polrichtung verbindet, um ähnlich wie bei dem Reinigungsverfahren, das bei dem üblichen Wechselstrom-TIG-Schweißen erreicht wird, eine zwischengeschaltete Reinigungsperiode zu schaffen.

Weitere Merkmale und Vorteile der Erfindung ergeben sich aus der folgenden Beschreibung und den Zeichnungen, in denen bevorzugte Ausführungsformen der Erfindung an Beispielen näher erläutert sind. Es zeigt:

Fig. 1    eine schematische Darstellung der Verwendung der vorliegenden Erfindung bei einer vorhandenen Gleichstromquelle zum TIG-Schweißen von Aluminium,

Fig. 2    einen Verdrahtungsplan, der die bevorzugte Ausführungsform nach der Erfindung zeigt,

Fig. 2A   eine Teildarstellung des Verdrahtungsplanes, die Einzelheiten des Dämpfers S der Fig. 2 zeigt,

Fig. 3    ein vereinfachtes Schaltbild der in Fig. 2 dargestellten bevorzugten Ausführungsform der Erfindung, das die Operationscharakteristika der Erfindung zusammen mit bestimmten Schaltcharakteristika zeigt, die im Betrieb der bevorzugten Ausführungsform verwendet werden,

Fig. 4    eine graphische Darstellung der Schaltcharakteristika und der im Betrieb der bevorzugten Ausführungsform der Erfindung auftretenden Stromimpulse und

Fig. 5    eine schematische Darstellung, welche die Verwendung der Erfindung bei einer Abbrandelektrode oder beim MIG-Lichtbogenschweißverfahren zeigt.

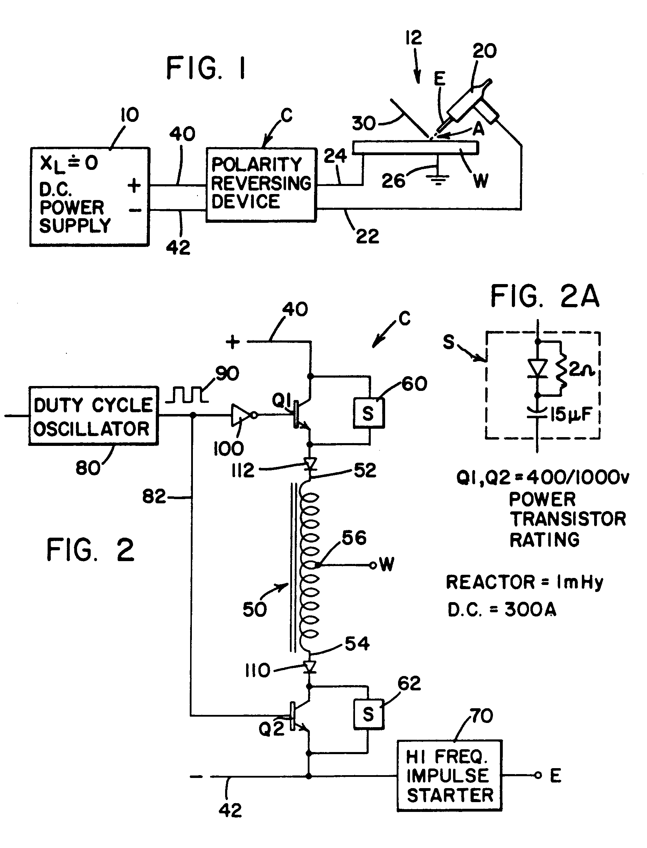

Wendet man sich nun den Zeichnungen zu, die nur zur Illustration einer bevorzugten Ausführungsform der Erfindung und nicht zur Beschränkung der Erfindung dienen sollen, so erkennt man, daß in Fig. 1 eine übliche Gleichstromquelle mit 10 bezeichnet ist, die von vielen Schweißern zum Schweißen von verschiedenen Werkstücken unter vielen Umweltbedingungen verwendet wird. Die Erfindung dient in erster Linie dazu, diese Gleichstromquelle in eine solche für ein TIG-Schweißgerät derjenigen Gattung umzuwandeln, die eine TIG-Schweißstation 12 versorgt, die eine schematisch dargestellte Schweißzange 20 mit Tungsten-Elektrode aufweist, die auf das Werkstück W gerichtet ist, das bei 26 geerdet ist. Das Werkstück besteht aus Aluminium, dem Aluminium mit einem Fülldraht 30 zugeführt wird. Die Hitze des zwischen der Elektrode E und dem Werkstück W brennenden Lichtbogens A schmilzt den Draht 30 und lagert das abgeschmolzene Drahtmaterial auf dem Werkstück ab. Nach der Erfindung ist ein Umform-Aggregat oder -kreis C einerseits an den positiven Ausgang 40 und den negativen Ausgang 42 der Gleichstromquelle 10 und andererseits mit dem Kabel 24 an das Werkstück W und mit dem Kabel 22 an die Elektrode E angeschlossen. Diese Stromversorgung hat keine Ausgangsinduktanz.

Wie aus Fig. 2 hervorgeht, hat der Umformkreis C eine Drossel oder Drosselspule 50 mit hohem Blindwiderstand, die ein oberes Ausgangsende 52 und ein unteres Ausgangsende 54 und im mittleren Teil eine Anzapfung 56 aufweist. Die einander gegenüberliegenden Enden der Drosselspule sind durch gleichgepolte Netzstromtransistorschalter Q1 und Q2 an die Ausgangsleitungen 40 und 42 angeschlossen, zu denen Standarddämpfungskreise 60 bzw. 62 parallelgeschaltet sind und zu denen Stromsperrdioden 110 und 112 gehören. Ferner ist eine Standardanlasserschaltung 70 vorgesehen, wobei ein Hochfrequenzstrom zwischen Elektrode E und Werkstück W angelegt werden kann, um einen Lichtbogen zu zünden und den TIG-Schweißprozeß einzuleiten. Wenn der Schalter Q1 geschlossen und der Schalter Q2 geöffnet ist, fließt ein Strom vom Pluspol oder positiven Ausgang 40 zum Minuspol oder zum negativen Ausgang der Gleichstromquelle in Richtung des durch eine ausgezogene Linie dargestellten Pfeiles. Dieser negative Strom erzeugt eine extrem starke Erhitzung des Werkstückes, wie dies beim Gleichstrom-TIG-Schweißen mit negativer Elektrodenpolung erreicht wird. Dieser Strom fließt in einem Stromkreis, zu dem der obere Teil der Drosselspule 50 zwischen der Mittelabzapfung 56 und dem oberen Ende 52 der Drosselspule gehört.

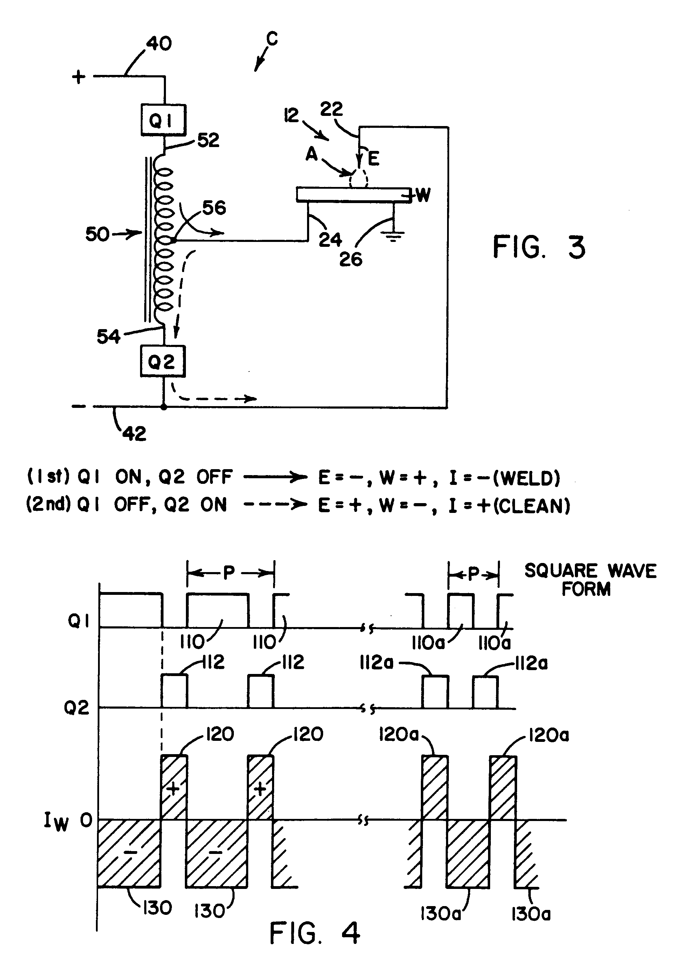

Nachdem in Übereinstimmung mit der Erfindung eine vorher ausgewählte Heizperiode beendet wurde, wird der Stromtransistorschalter Q1 in seine nicht-leitende Stellung umgeschaltet. Gleichzeitig wird der Stromtransistorschalter Q2 stromleitend. Die in der Drosselspule 50 im unteren Teil zwischen der Mittelabzapfung 56 und dem unteren Ende 54 gespeicherte Energie kann dann durch die TIG-Schweißstation 12 in positiver Richtung fließen, wie dies durch den in strichierten Linien dargestellten Pfeil in Fig. 3 angedeutet ist. Hierbei fließt der Strom von der Elektrode E durch den Lichtbogen A zum Werkstück W. Dies ist im wesentlichen das Gleiche wie TIG-Schweißen mit Gleichstrom und positiv gepolter Elektrode, bei dem die Elektronen vom Werkstück emittiert werden und auf die Tungsten-Elektrode aufprallen. Hierdurch wird eine positiv gepolte Reinigungsperiode erzeugt, welche in dem zu schweißenden Bereich schädliche Stoffe vom Werkstück beseitigt. Diese Reinigungsperiode oder der positiv gerichtete Strom ist, verglichen mit dem negativ gerichteten Strom oder der negativen Polung, von relativ kurzer Dauer, so daß eine wirksame Reinigung stattfindet, ohne die Elektrode zu zerstören oder die Wirksamkeit des Heizprozesses herabzusetzen.

Zum Steuern der Schaltfunktion für die Polumkehrsteuerung des Stromflusses in der Drosselspule 50 könnten verschiedene Anordnungen vorgesehen werden. Nach einer bevorzugten Ausführungsform der Erfindung, wie sie in Fig. 2 dargestellt ist, hat ein Arbeits-Impulsgenerator 80 einen Ausgang 82 und erzeugt eine Reihe von Impulsen 90, deren Breite festliegt, wenn der Stromtransistorschalter Q1 nicht leitend ist. Positive Impulse 90 werden durch einen Inverter 100 der Basis des Transistorschalters Q2 zugeleitet. Die beiden Stromtransistorschalter werden wechselseitig durch Kipphebel zwischen einer ersten Schaltstellung und einer zweiten Schaltstellung hin- und hergeschaltet, wobei bei der ersten Schaltstellung der Transistorschalter Q1 leitend und der Transistorschalter Q2 nicht leitend ist und bei der zweiten Schaltstellung der Stromtransistorschalter Q2 leitend und der Stromtransistorschaltung Q1 nicht leitend ist. Diese Transistoren sind standardmäßige Starkstrom-Schnellschalttransistoren, wie beispielsweise Darlington-geschaltete Stromtransistoren. Zu jedem Transistor gehört ein Dämpfer S, wie er schematisch in Fig. 2A dargestellt ist. Einzelheiten der Bestandteile dieser bevorzugten Ausführungsform sind rechts von Fig. 2 angegeben.

Die Arbeitscharakteristika der vorliegenden Erfindung werden nun unter Bezugnahme auf die Fig. 1 bis 3 beschrieben; die Perioden sind jedoch schematisch als Impulse in Fig. 4 dargestellt. Das obere Impulsdiagramm stellt die leitende Schaltstellung des Stromtransistorschalters Q1 dar. Wenn dieser Transistor leitend ist, ist ein Impuls 110 vorhanden. Wenn der Impuls 110 nicht vorhanden ist, gibt es einen Impuls 112, welcher anzeigt, daß sich der Stromtransistorschalter Q2 in der leitenden Stellung befindet, wie dies in dem nächsten Diagramm darunter dargestellt ist. Der Schweißstrom $I_W$ durch den Lichtbogen A ist in dem untersten Diagramm von Fig. 4 dargestellt.

Die Impulse 90 korrespondieren im allgemeinen mit den in Fig. 4 dargestellten Impulsen 112. Die Perioden des Schweißstromes mit negativer Polung sind $I_W$, die als Heizperioden 130 dargestellt sind. Die Reinigungsperioden 120 mit positiver Polung trennen die Heizperioden und haben eine Dauer, die der Dauer der Impulse 90 entspricht. Durch Verändern des Oszillators 80 kann der Arbeitszyklus während der Periode P durch Verändern der Breite der Impulse 90 geändert werden. Dieses Konzept ist auf der rechten Seite der Fig. 4 dargestellt, wo jeder der verschiedenen Impulse eine abgewandelte Art der gleichen Impulse im linken Teil der Fig. 4 mit dem Zusatz a darstellt.

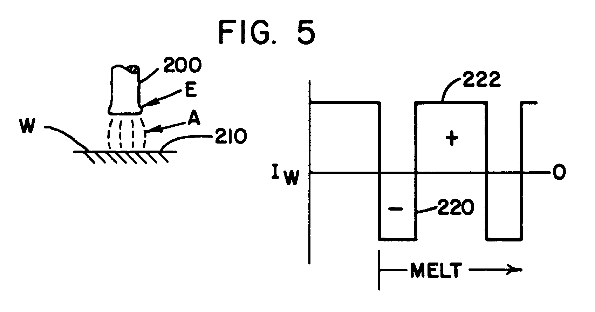

Wie weiter oben erläutert, ist die Erfindung vornehmlich auf das TIG-Schweißen gerichtet und auf die Möglichkeit, eine standardmäßige, leicht erhältliche Gleichstromquelle oder ein Schweißgerät in ein TIG-Schweißgerät vom Wechselstromtyp umzuwandeln. In einigen Fällen kann das gleiche Konzept auch beim Schweißen mit einer abschmelzenden Elektrode angewandt werden, wie dies in einer schematischen Darstellung nach Fig. 5 vorgeschlagen wird. Hierbei wird eine sich selbst verzehrende Elektrode 200 abgeschmolzen und auf dem Werkstück 210 durch einen kugelförmigen Übergang, durch Kurzschlußübergang oder durch Impulsstromübergang od.dgl. abgelagert. Bei jedem dieser Metallübergangssysteme kann es vorteilhaft sein, von einem positiven Strom auf einen negativen Strom überzugehen, um die Elektrodenabschmelzmenge zu vergrößern, oder aus anderen Gründen. Hierbei kann die vorliegende Erfindung dazu verwendet werden, um eine momentane Strommumpolung zur Verwendung beim Schweißen ebenso wie für das TIG-Schweißen zu erreichen. Das TIG-Schweißen ist jedoch das Hauptanwendungsgebiet der vorliegenden Erfindung.

Die rechte Seite der Fig. 5 zeigt, daß der Schweißstrom eine negative oder positive Polarität annehmen kann, wenn die Drosselspule 50 nach der Erfindung gesteuert wird. In diesem Fall kann ein Schweißzyklus durch einen Lichtbogen erreicht werden, der entweder in positiver oder negativer Richtung strömt, wie dies durch die Impulse 222 bzw. 220 angedeutet ist.

Die in der Drosselspule gespeicherte Energie wird im Lichtbogen verbraucht, wenn sich die Schaltmittel oder das Verfahren in der Reinigungsperiode befinden. Der Fluß in der Drossel wird immer versuchen, in die gleiche Richtung zu fließen, um den erforderlichen Strom für die schnellen, kurzen Reinigungsimpulse zwischen den aufrechterhaltenen Heizimpulsen zur Verfügung zu stellen. Der Blindwiderstand der Drossel oder Drosselspule hat einen Wert, der so bemessen ist, daß die in dieser Anmeldung angegebenen Resultate erzielt werden. Die Geschwindigkeit des Stromwechsels durch den Lichtbogen A ist im Hinblick auf den hohen Blindwiderstand der Drossel sehr groß. Dies erzeugt einen Sperrimpuls beim Durchgang durch die Nullinie, so daß der Lichtbogen aufrechterhalten wird, wenn sich die Polarität umkehrt, was bei einem jeden Schaltvorgang der Fall ist.

Der Kreis C hat alle Vorteile einer normalen WechselstromTIG-Schweißeinrichtung, bietet jedoch zusätzlich die Möglichkeit, das Verhältnis von Heizperiode und Reinigungsperiode am Werkstück für eine vorgegebene Periode P einzustellen. Dieser Steuerkreis sorgt dafür, daß die Elektrodenpolung einer Gleichstromquelle 10 alterniert, was es bisher beim TIG-Schweißen nicht gab.

Bei der bevorzugten Ausführungsform ist der Stromtransistorschalter Q1 für die längste Zeit der Periode P leitend. Der übrige Teil fließt während der zweiten Schaltstellung, in der der Stromtransistorschalter Q2 sich in seiner leitenden Stellung befindet. Während dieser Reinigungsperiode wird der Strom für den Lichtbogen von der in der Drossel gespeicherten Energie geliefert. Die Transistoren sind positive Schaltvorrichtungen. Aus diesem Grunde wird die Drosselenergie in der Drossel zurückgehalten, ohne einen frei laufenden Stromfluß. Auf diese Weise treten im Lichtbogen A während des Nulldurchganges zwischen den Polumkehrungen Hochspannungssperrimpulse auf, um den Lichtbogen A zu zünden. Der Oszillator für den Arbeitszyklus kann das Verhältnis von positivem und negativem Strom steuern, um das Ausmaß der Reinigungswirkung zu steuern, die während des positiven Stromflusses erzeugt wird.

Eine andere Anwendung des Stromumkehrkreises würde in der Reduktion der Blaswirkung des Lichtbogens liegen. Diese Ablenkung des Lichtbogens, die durch die Einwirkung eines magnetischen Feldes auf den Lichtbogen hervorgerufen wird, tritt normalerweise bei abschmelzenden Elektroden bei großen Gleichstromhöhen auf. Die Erfindung reduziert jede Blaswirkung durch vorübergehendes Umkehren des Schweißstromes.

## Patentansprüche

1. Vorrichtung, gespeist von einer Gleichstromquelle (10) mit einem positiven Ausgang (40) und einem negativen Ausgang (42), die einen alternierenden Strom zwischen einem Werkstückteil (W) und einem Elektrodenteil (E) in einem Lichtbogenschweißsystem fließen laßt, **gekennzeichnet durch** eine induktive Drosselspule (50) mit einer Anzapfung (56), einander gegenüberliegenden ersten und zweiten Enden (52 bzw. 54) und einem gemeinsamen Kern; Mittel (24) zum Anschließen der Anzapfung (56) an eines der beiden Teile (W) bzw. (E); Mittel (22) zum Anschließen des anderen Teiles (E) bzw. (W) an einen der Stromversorgungsausgänge (40 bzw. (42); einen ersten Stromschalter (Q1); Mittel zum Verbinden des ersten Stromschalters (Q1) mit dem ersten Ende (52) der Drosselspule (50) und einem der Stromversorgungsausgänge (40 bzw. 42), der eine erste Polarität aufweist; einen zweiten Stromschalter (Q2); Mittel zum Verbinden des zweiten Stromschalters (Q2) mit dem zweiten Ende (54) der Drossel (50) und einem der beiden Stromversorgungsausgänge (42 bzw. 40), der eine zweite Polarität aufweist; wobei jeder Schalter (Q1 bzw. Q2) eine leitende Stellung hat, die den Strom durch die Drossel (50) von dem positiven Ausgang (40) zum negativen Ausgang (42) in der gleichen Richtung fließen läßt; und durch eine Steuervorrichtung (C) für die ersten und zweiten Schalter (Q1 und Q2), wobei die Steuervorrichtung (C) eine Signalvorrichtung zum Umschalten zwischen einer ersten Schaltstellung und einer zweiten Schaltstellung aufweist, wobei in der ersten Schaltstellung Energie von der Stromquelle (10) zur Drosselspule (50) geleitet wird, wenn der erste Schalter (Q1) sich in seiner leitenden Stellung und der zweite Schalter (Q2) sich in seiner nicht leitenden Stellung befindet, um Strom durch die Drosselspule (50) von deren erstem Ende (52) zu deren Anzapfung (56) zu leiten und hierdurch den Kern zu magnetisieren und wobei in der zweiten Schaltstellung der zweite Schalter (Q2) sich in seiner leitenden Stellung und der erste Schalter (Q1) sich in seiner nicht leitenden Stellung befindet, um Strom durch die Drosselspule (50) von deren Anzapfung (56) zu deren zweitem Ende (54) fließen zu lassen, wenn der Kern entmagnetisiert ist.

2. Vorrichtung nach Anspruch 1, **dadurch gekennzeichnet,** daß die erste Schaltstellung eine erste Zeitdauer und die zweite Schaltstellung eine zweite Zeitdauer lang anhält und daß die Signalvorrichtung eine Zeiteinstellvorrichtung zum Verändern von wenigstens eines der beiden ersten und zweiten Zeiträume aufweist.

3. Vorrichtung nach einem der Ansprüche 1 oder 2, **dadurch gekennzeichnet,** daß die Zeiteinstellvorrichtung Mittel aufweist, um die Summe der ersten und zweiten Zeitdauer im wesentlichen gleich zu halten.

4. Vorrichtung nach einem der Ansprüche 1 bis 3, **dadurch gekennzeichnet,** daß die erste Polarität positiv ist.

5. Vorrichtung nach einem der Ansprüche 1 bis 4, **dadurch gekennzeichnet,** daß die Zeitsteuerung ein Arbeitszyklusoszillator ist.

6. Vorrichtung nach einem der Ansprüche 1 bis 5, **dadurch gekennzeichnet,** daß die Vorrichtung bei einem TIG-Schweißsystem verwendbar ist, bei dem die Elektrode eine sich nicht selbst verzehrende Elektrode ist, und daß die Zeitsteuerung Mittel aufweist, mit denen die erste Zeitdauer so ausgewählt werden kann, daß sie im wesentlichen größer ist als die zweite Zeitdauer.

7. Verfahren zum TIG-Lichtbogenschweißen, bei dem ein alternierender Strom zwischen einem sich nicht selbst verzehrenden Elektrodenteil und einem Werkstoffteil in Form eines Lichtbogens übergeleitet wird, **gekennzeichnet durch** folgende Verfahrensschritte:

(a) Anschließen einer Gleichstromquelle über einen ersten Schalter und einen ersten Teil einer Drosselspule an die genannten Teile mit einer Polarität, die den Strom in einer negativen Richtung vom Werkstück zur Elektrode fließen läßt, während in einem zweiten Teil der Drosselspule, der mit dem ersten Teil durch einen gemeinsamen Kern verbunden ist, Energie gespeichert wird;

(b) Trennen der Stromquelle von den genannten Teilen und gleichzeitiges Verbinden des zweiten Teiles der Drosselspule in einer positiven Polrichtung mit den genannten Teilen für eine vorgegebene Zeitdauer, während der Strom in einer positiven Richtung während der genannten Zeitdauer von dem Elektrodenteil zum Werkstückteil aufgrund von Energie fließt, die in der genannten Drosselspule gespeichert ist und in dieser in der genannten, vorgegebenen Richtung fließt und

(c) aufeinanderfolgendes Wiederholen der Schritte (a) und (b).

8. Verfahren nach Anspruch 7, **dadurch gekennzeichnet,** daß der Arbeitszyklus zwischen den Verfahrensschritten (a) und (b) eingestellt wird.

9. Verfahren nach Anspruch 7 oder 8, **dadurch gekennzeichnet,** daß eine vorgegebene Zeitdauer eingestellt wird.

10. Verwendung einer Vorrichtung nach einem der Ansprüche 1 bis 6 zum TIG-Lichtbogenschweißen, bei der ein alternierender Strom zwischen einem sich nicht selbst verzehrenden Elektrodenteil und einem Werkstückteil in Form eines Lichtbogens geleitet wird.

## Claims

1. A device supplied from a direct current power source (10) with a positive output (40) and a negative output (42) which causes an alternating current to flow between a workpiece member (W) and an electrode member (E) in an arc welding system, characterised by an inductive reactor (50) with a tap (56), first and second opposite ends (52 or 54) and a common core; means (24) for connecting the tap (56) to one of the two members (W) or (E); means (22) for connecting the other member (E) or (W) to one of the power supply outputs (40 or 42); a first power switch (Q1); means of connecting the first power switch (Q1) between the first end (52) of the reactor (50) and to one of the power supply outputs (42 or 40) which has a first polarity; a second power switch (Q2); means of connecting the second power switch (Q2) between the second end (54) of the reactor (50) and one of the two power supply outputs (42 or 40) which has a second polarity, wherein each switch (Q1 or Q2) has a conducting position which allows current to flow through the reactor (50) in a like direction from the positive output (40) to the negative output (42); and a control means (C) for the first and second switches (Q1 and Q2), wherein the control means (C) has a signal means for switching over between a first switch position and a second switch position, wherein in the first switch position energy is supplied from the power source (10) to the reactor (50) if the first switch (Q1) is in its conducting position and the second switch (Q2) is in its non-conducting position, in order to pass current through the reactor (50) from its first end (52) to the tap (56) and by this means to magnetise the core, and wherein in the second switch position the second switch (Q2) is in its conducting position and the first switch (Q1) is in its non-conducting position in order to cause current to flow through the reactor (50) from its tap (56) to its second end (54) if the core is demagnetised.

2. A device according to Claim 1, characterised in that the first switch position is maintained for a first duration and the second switch position is maintained for a second duration, and that the signal means has a timing means for changing at least one of the first and second durations.

3. A device according to one of Claims 1 or 2, characterised in that the timing means has means for maintaining the sum of the first and second durations substantially equal.

4. A device according to any one of Claims 1 to 3, characterised in that the first polarity is positive.

5. A device according to any one of Claims 1 to 4, characterised in that the timing means is a duty cycle oscillator.

6. A device according to any one of Claims 1 to 5, characterised in that the device can be used in a TIG welding system in which the electrode is a non-consumable electrode, and that the timing means has means for selecting the first duration so that it is substantially greater than the second duration.

7. A method of TIG arc welding in which an alternating current is passed in the form of an arc between a non-consumable electrode member and a workpiece member, characterised by the following steps:

(a) connecting a D.C. power supply via a first switch and a first portion of a reactor across the said members with a polarity which causes current to flow in a negative direction from the workpiece to the electrode whilst energy is stored in a second portion of the reactor which is connected to the first portion by means of a common core;

(b) disconnecting the power supply from across the said members and simultaneously connecting the second portion of the reactor in a positive polarity direction across the said members for a given duration, whereby current flows in a positive direction from the electrode member to the workpiece member during the said duration due to energy which is stored in the said reactor, and flows in the latter in the said given direction, and

(c) repeating steps (a) and (b) in sequence.

8. A method according to Claim 7, characterised in that the duty cycle between steps (a) and (b) is adjusted.

9. A method according to Claims 7 or 8, characterised in that a predetermined duration is set.

10. The use of a device according to any one of Claims 1 to 6 for TIG arc welding in which an alternating current is passed in the form of an arc between a non-consumable electrode member and a workpiece member.

**Revendications**

1. Dispositif, alimenté par une source de courant continu (10) avec une sortie positive (40) et une sortie négative (42), qui fait passer un courant alternatif dans un système de soudage à l'arc, entre une partie de pièce à usiner (W) et une partie d'électrode (E), caractérisé par une bobine de self inductive (50) avec une prise (56), des premières et des secondes extrémités (respectivement 52 et 54) opposées les unes aux autres et un noyau commun ; des moyens (24) pour connecter la prise (56) à l'une des deux parties (W ou E) ; des moyens (22) pour connecter l'autre partie (E) ou (W) à l'une des sorties (40 ou 42) de l'alimentation électrique ; un premier interrupteur électrique (Q1) ; des moyens pour relier le premier interrupteur (Q1) à la première extrémité (52) de la bobine de self (50) et à l'une des sorties (40 ou 42) de l'alimentation électrique qui présente une première polarité ; un second interrupteur électrique (Q2) ; des moyens pour relier le second interrupteur (Q2) à la seconde extrémité (54) de la bobine de self (50) et à l'une des deux sorties (42 ou 40) de l'alimentation électrique qui présente une seconde polarité ; chaque interrupteur (Q1 ou Q2) ayant une position conductrice qui laisse passer le courant dans le même sens à travers la bobine (50), de la sortie positive (40) à la sortie négative (42) ; ainsi que par un dispositif de commande (C) pour les premiers et les seconds interrupteurs (Q1 et Q2), ce dispositif de commande (C) comportant un dispositif à signaux en vue de la commutation entre une première position de commutation et une seconde position de commutation, dans la première position de l'énergie étant envoyée de la source de courant (10) à la bobine de self (50) lorsque le premier interrupteur (Q1) se trouve dans sa position conductrice et le second interrupteur (Q2) dans sa position non conductrice, afin d'envoyer le courant à travers la bobine de self (50) de sa première extrémité (52) à sa prise (56) et de magnétiser ainsi le noyau et, dans la seconde position de commutation, le second interrupteur (Q2) se trouvant dans sa position conductrice et le premier interrupteur (Q1) dans sa position non conductrice, afin de faire passer le courant à travers la bobine de self (50), de sa prise (56) à sa seconde extrémité (54), lorsque le noyau est démagnétisé.

2. Dispositif selon la revendication 1, caractérisé en ce que la première position de commutation se maintient pendant une première durée et la seconde position de commutation pendant une seconde durée et en ce que le dispositif à signaux comporte un dispositif de réglage de temps pour faire varier au moins l'une des deux premières et secondes durées.

3. Dispositif selon l'une des revendications 1 ou 2, caractérisé en ce que le dispositif de réglage de temps comporte des moyens destinés à maintenir à peu près constante la somme des premières et des secondes durées.

4. Dispositif selon l'une des revendications 1 à 3, caractérisé en ce que la première polarité est positive.

5. Dispositif selon l'une des revendications 1 à 4, caractérisé en ce que la commande de temps est un oscillateur de cycle de travail.

6. Dispositif selon l'une des revendications 1 à 5, caractérisé en ce que le dispositif est utilisable dans un système de soudage TIG dans lequel l'électrode est une électrode non fusible et en ce que la commande de temps comporte des moyens par lesquels la première durée peut être choisie de manière à être nettement supérieure à la seconde durée.

7. Procédé de soudage à l'arc TIG dans lequel un courant alternatif est transmis entre une partie d'électrode non fusible et une partie de pièce sous la forme d'un arc, caractérisé par les étapes de procédé suivantes :

a) raccordement d'une source de courant continu par un premier interrupteur et par une première partie d'une bobine de self aux parties citées dont la polarité laisse passer le courant dans un sens négatif, de la pièce vers l'électrode, tandis que de l'énergie est envoyée dans une seconde partie de la bobine de self qui est reliée à la première partie par un noyau commun ;

b) séparation de la source de courant et des parties citées et raccordement simultané de la seconde partie de la bobine de self dans un sens positif, aux parties citées pour une durée donnée, tandis que le courant passe, dans un sens positif, pendant toute ladite durée, de la partie d'électrode vers la partie de pièce à usiner, par suite d'une énergie accumulée dans ladite bobine de self et traverse celle-ci dans le sens donné, cité et

c) renouvellement successif des étapes (a) et (b).

8. Procédé selon la revendication 7, caractérisé en ce que le cycle de travail est réglé entre les étapes de procédé (a) et (b).

9. Procédé selon la revendication 7 ou 8, caractérisé en ce qu'une durée donnée est réglée.

10. Mise en oeuvre d'un dispositif selon l'une des revendications 1 à 6 pour le soudage à l'arc TIG dans lequel un courant alternatif est envoyé, sous la forme d'un arc, entre une partie d'électrode non fusible et une partie de pièce à usiner.

FIG. 1

FIG. 2A

FIG. 2

Q1,Q2 = 400/1000v
POWER
TRANSISTOR
RATING

REACTOR = ImHy

D.C. = 300A

FIG. 3

(1st) Q1 ON, Q2 OFF $\longrightarrow$ E = −, W = +, I = −(WELD)

(2nd) Q1 OFF, Q2 ON ---➤ E = +, W = −, I = +(CLEAN)

SQUARE WAVE FORM

FIG. 4

# FIG. 5